# EUROPÄISCHE PATENTSCHRIFT

(11) **EP 3 956 184 B1**
(45) Veröffentlichungstag und Bekanntmachung des Hinweises auf die Patenterteilung: **26.06.2024**
(21) Anmeldenummer: 20719395.4
(22) Anmeldetag: 14.04.2020
(51) Int. Cl.: B60S 1/40, B60S 1/52, B60S 1/38, B60S 1/34, B60S 1/04, B60S 1/32

(54) **SCHEIBENWISCHANLAGE FÜR EINEN KRAFTWAGEN**
WINDSCREEN WIPER SYSTEM FOR A MOTOR VEHICLE
SYSTÈME D'ESSUIE-GLACE DESTINÉ À UN VÉHICULE AUTOMOBILE

(30) Priorität: 16.04.2019 DE 102019110083
(43) Veröffentlichungstag der Anmeldung: 23.02.2022
(73) Patentinhaber: AUDI AG, 85045 Ingolstadt (DE); Dr. Ing. h.c. F. Porsche AG, 70435 Stuttgart (DE); A. Raymond et Cie, 38000 Grenoble (FR); VOLKSWAGEN AKTIENGESELLSCHAFT, 38440 Wolfsburg (DE)
(72) Erfinder: HAEFNER, Stephan, 95473 Prebitz (DE); ACKERMANN, Frank, 38154 Koenigslutter am Elm (DE); AUCH, Sven, 70327 Stuttgart (DE); FEGER, Axel, 79540 Loerrach (DE); BODE, Karl, 79540 Loerrach (DE)
(74) Vertreter: Hofstetter, Schurack & Partner
(86) Internationale Anmeldenummer: PCT/EP2020/060418
(87) Internationale Veröffentlichungsnummer: WO 2020/212322

(56) Entgegenhaltungen:
- WO-A1-2020/043264
- DE-A1-102014 009 721
- DE-A1-102015 224 631
- US-A1- 2015 217 729
- US-A1- 2016 144 827

## Beschreibung

Die Erfindung betrifft eine Scheibenwischanlage für einen Kraftwagen gemäß dem Oberbegriff des Patentanspruchs 1.

Eine derartige Scheibenwischanlage ist beispielsweise bereits aus der DE 10 2012 021 489 A1 bekannt und umfasst wenigstens ein Wischerblatt, welches einen an einem Wischerblattelement befestigten Reiter sowie einen gelenkig mit diesem Reiter verbundenen Adapter umfasst, welcher über eine Aufnahme mit einem Bauelement in Form eines kastenförmigen Anbindungselements eines Wischerarms der Scheibenwischanlage verbunden ist. Die Verbindung des Adapters mit dem Verbindungselement erfolgt über eine formschlüssige Schiebeverbindung, bis eine Rastverbindung den Adapter an dem Anbindungselement sichert.

Während diese Scheibenwischanlage jeweilige Trockenwischerarme umfasst, bei welchen zusätzlich zu der Scheibenwischanlage auch eine vollständig separat dazu ausgebildete Scheibenwaschanlage vorgesehen ist, welche üblicherweise Düsen im rückwärtigen Bereich einer Fronthaube des Kraftwagens umfasst, über welche die Frontscheibe mit einer Scheibenreinigungsflüssigkeit beaufschlagt werden kann, kommen seit einigen Jahren vermehrt sogenannte Nasswischerarme zum Einsatz, bei welchen die Scheibenwaschanlage in die Scheibenwischanlage integriert ist. Hierbei sind in den jeweiligen Wischerarm und das zugeordnete Wischerblatt diverse Bauelemente wie Schlauchleitungen, Kanäle und Düsen integriert, um über den jeweiligen Wischerarm und das zugeordnete Wischerblatt direkt die Frontscheibe mit Reinigungsflüssigkeit beaufschlagen zu können. Um dies zu bewerkstelligen, ist es bei vielen Systemen vorgesehen, Teile der Scheibenwaschanlage in das jeweilige Wischerblatt zu integrieren. Dies ist allerdings mit erheblichen Kosten verbunden und wenig nachhaltig, da die Wischerblätter bekanntermaßen von Zeit zu Zeit getauscht werden müssen und demzufolge Teile der Scheibenwaschanlage somit ebenfalls ausgetauscht werden müssen. Ein Beispiel für eine derartige Scheibenwischanlage ist aus der EP 2 786 906 A1 als bekannt zu entnehmen.

Darüber hinaus ist es bereits bekannt, Teile eines jeweiligen Wischerarms mit Windleitelementen zu versehen. Dies ist ebenfalls bereits aus der DE 10 2012 021 489 A1 bekannt.

Die DE 10 2014 009 721 A1 betrifft ein Wischerblatt für eine Scheibenwischanlage eines Kraftwagens, mit wenigstens einem Lagerelement, über welches das Wischerblatt mit einem Lagerelement eines Wischerarms verbindbar ist, und mit wenigstens einem am Wischerblatt angeordneten Waschdüsenelement, welches über einen Versorgungsschlauch mit Waschflüssigkeit versorgbar ist, wobei auf Seiten des Wischerblatts wenigstens ein Anschlusselement vorgesehen ist, an welchem der Versorgungsschlauch anschließbar ist.

Die US 2015/217 729 A1 beschreibt eine Scheibenwischervorrichtung umfassend ein Wischerblatt mit mindestens einer Nut, in der ein Längsstreifen angeordnet ist. Eine Verbindungsvorrichtung für einen Schwingarm umfasst mindestens zwei Teile, die mit Vorsprüngen/Löchern versehen sind, die so angeordnet sind, dass die Teile durch einen Schnappvorgang lösbar miteinander verbunden werden. Der erste Teil wird auf dem Wischerblatt gehalten, und der zweite Teil umfasst einen Kanal, in den der Schwingarm eingeführt werden kann.

Die WO 2020/043264 A1 wird als Stand der Technik gemäß Art. 54(3) EPÜ genannt.

Aufgabe der vorliegenden Erfindung ist es, eine Scheibenwischanlage der eingangs genannten Art zu schaffen, welche unter Bereitstellung diverser Funktionen besonders einfach aufgebaut ist und einen günstigen Wechsel des Wischerblatts erlaubt.

Diese Aufgabe wird erfindungsgemäß durch eine Scheibenwischanlage mit den Merkmalen des Patentanspruchs 1 gelöst. Vorteilhafte Ausgestaltungen der Erfindung sind Gegenstand der abhängigen Ansprüche.

Die erfindungsgemäße Scheibenwischanlage umfasst mindestens ein Wischerblatt, welches einen an einem Wischerblattelement befestigten Reiter sowie ein gelenkig mit dem Reiter verbundenen Adapter umfasst. Dieser Adapter ist über eine Aufnahme mit einem Bauelement des Wischerarms der Scheibenwischanlage verbunden, wobei dieses Bauelement erfindungsgemäß eine Wischerstange des Wischerarms ist, welche beispielsweise über eine Steckverbindung mit dem Adapter verbunden ist. Eine direkte Verbindung des Adapters mit der Wischerstange des zugehörigen Wischerarms hat dabei insbesondere den Vorteil einer besonders einfachen und kostengünstigen Ausgestaltung, da auf Verbindungselemente zwischen der Wischerstange und dem Adapter verzichtet wird. Vielmehr wird der Adapter unmittelbar an der Wischerstange befestigt und gesichert.

Des Weiteren ist erfindungsgemäß vorgesehen, dass an der Wischerstange des Wischerarms separat von dem Adapter ein weiteres Funktionselement angeordnet ist. Bei diesem Funktionselement handelt es sich insbesondere um ein Windleitelement, mittels welchem die aerodynamischen Eigenschaften des jeweiligen Wischerarms bzw. Wischerblatts verbessert werden. Alternativ oder zusätzlich kann dieses Funktionselement auch zur Integration einer Scheibenreinigungseinrichtung vorgesehen sein, um hierdurch einen sogenannten Nasswischerarm zu schaffen. Da das Funktionselement, welches demzufolge als Windabweiser und/oder Bauteil der Scheibenreinigungseinrichtung ausgebildet sein kann, separat von dem Adapter an der Wischerstange befestigt werden kann, ergibt sich eine unabhängige Ausgestaltung von Adapter und Funktionselement. Dies hat beispielsweise den Vorteil, dass beim Austausch des Wischerblatts, bei welchem auch der Adapter entsorgt wird, das Funktionselement in Form des Windabweisers und/oder des Bauteils der Scheibenreinigungseinrichtung an der Wischerstange verbleibt und somit ein Austausch des Wischerblatts keine Nachteile hinsichtlich der Kosten oder der Nachhaltigkeit nach sich zieht. Vielmehr bleibt durch die getrennte Ausgestaltung von Adapter und Funktionselement das Funktionselement vollständig an der Wischerstange vorhanden.

Ferner ist vorgesehen, dass der Adapter mittels einer Rasteinrichtung an der Wischerstange fixiert ist, wobei die Rasteinrichtung mittels eines Betätigungselements zu lösen ist. Durch eine derartige Rasteinrichtung auf Seiten des Adapters ist es möglich, die Wischerstange besonders einfach zu gestalten und beispielsweise lediglich eine Rastvertiefung vorzusehen, in welche ein Rastelement des Adapters eingreifen kann, welches wiederum durch das Betätigungselement außer Eingriff mit der Rastvertiefung bringbar ist.

Schließlich ist vorgesehen, dass das Funktionselement eine Durchgangsöffnung aufweist, in welcher das Betätigungselement der Rasteinrichtung angeordnet ist. Somit kann das Betätigungselement durch das Funktionselement hindurch betätigt werden. Dies hat den Vorteil, dass der Adapter hinter dem Funktionselement angeordnet werden kann und gleichzeitig das Betätigungselement in einfacher Weise ausgelöst werden kann, um den Adapter bzw. das gesamte Wischerblatt von der Wischerstange zu lösen.

In weiterer Ausgestaltung der Erfindung kann das Funktionselement sowohl als Windabweiser als auch als Teil der Scheibenreinigungseinrichtung dienen. Eine Kombination dieser beiden Funktionen hat insbesondere den Vorteil, dass durch die Windabweiserfunktion auch das Aufbringen von Reinigungsflüssigkeit auf die zu reinigende Scheibe besonders günstig und im Windschatten des Windabweisers erfolgen kann. Zudem hat die Doppelfunktion des Funktionselements sowohl als Windabweiser als auch als Teil der der Scheibenreinigungseinrichtung den Vorteil einer Doppelnutzung, sodass das entsprechende Bauteil besonders einfach und kostengünstig hergestellt werden kann.

Eine weitere vorteilhafte Ausführungsform der Erfindung sieht vor, dass der Adapter durch das Funktionselement zumindest im Wesentlichen überdeckt ist. Hierdurch ergibt sich eine besonders günstige, verborgene Anordnung des Adapters, was beispielsweise hinsichtlich der Aerodynamik erhebliche Vorteile mit sich bringt.

Weiterhin hat es sich als vorteilhaft gezeigt, wenn der Adapter im Bereich eines freien Endes mit der Wischerstange verbunden ist und wenn das Funktionselement mit einem vom freien Ende beabstandeten Längenbereich der Wischerstange verbunden ist. Hierdurch kann die separate Ausgestaltung und Anbringung sowohl des Adapters als auch des Funktionselements an der Wischerstange auf einfache und kostengünstige Weise bewerkstelligt werden. Der Adapter ist dabei vorzugsweise am Ende der Wischerstange angeordnet, sodass das Wischerblatt in einfacher Weise von Zeit zu Zeit getauscht werden kann. Zum Tauschen des Funktionselements - falls dies erforderlich wird - muss zunächst das Wischerblatt über den Adapter von der Wischerstange abgenommen werden, bevor das Funktionselement von der Wischerstange abgenommen werden kann.

In weiterer Ausgestaltung der Erfindung hat es sich als vorteilhaft gezeigt, wenn sich das Funktionselement bis zu einem Federkasten des Wischerarms erstreckt. Ist hierbei das Funktionselement als Teil der Scheibenreinigungseinrichtung ausgebildet, können gerade auf der Fahrerseite besonders große Flächen der Frontscheibe mit Reinigungsflüssigkeit benetzt werden beiziehungsweise es kann ein Wischerblatt mit erheblicher Länge mit Reinigungsflüssigkeit beaufschlagt werden.

Alternativ hierzu ist es jedoch auch denkbar, dass das Funktionselement in einem Abstand vor dem Federkasten des Wischerarms endet. Hierdurch lässt sich gerade bei kompakteren Fahrzeugen mit kleinerer Frontscheibenfläche bzw. mit kürzeren Wischerblättern ein kostengünstigeres Funktionselement, welches beispielsweise als Teil der Scheibenreinigungseinrichtung ausgebildet ist, bereitstellen, welches in seiner Funktionsweise den Erfordernissen bei weitem genügt.

Weiterhin hat es sich als vorteilhaft gezeigt, wenn das Funktionselement einer Befestigungseinrichtung in Erstreckungsrichtung gesichert an der Wischerstange des Wischerarms angeordnet ist. Hierdurch ergibt sich eine besonders sichere Fixierung des Funktionselements an der Wischerstange.

Im Folgenden sind Ausführungsbeispiele der Erfindung beschrieben. Hierzu zeigt:

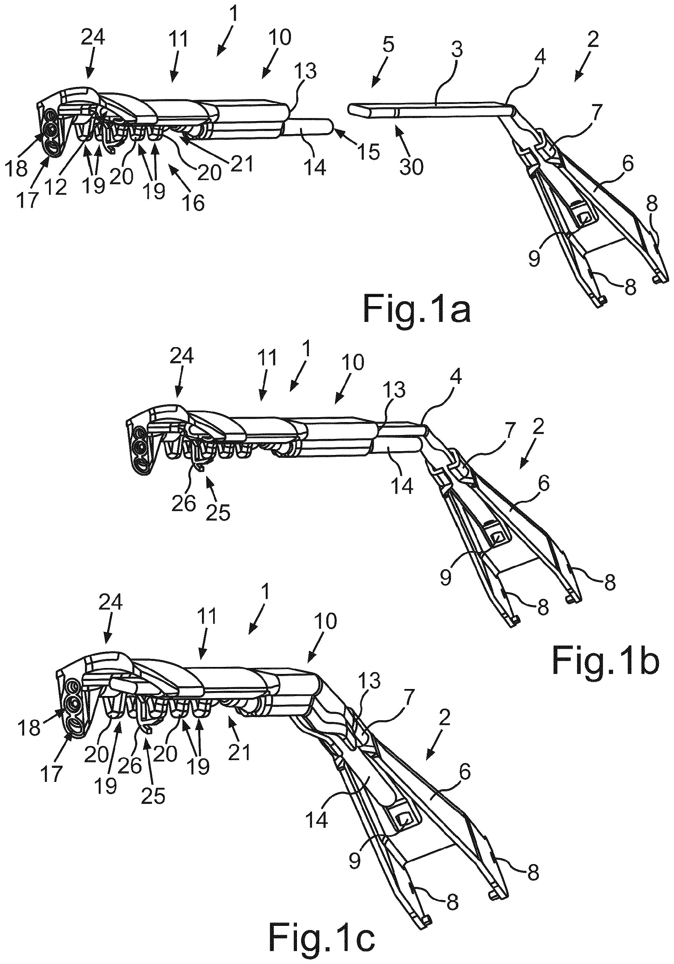

- Fig. 1a-1c: jeweilige Perspektivdarstellungen einer Montageabfolge eines Funktionselements, welches als Windabweiser ausgebildet ist und eine Scheibenreinigungseinrichtung umfasst, auf eine Wischerstange eines Wischerarms einer Scheibenwischanlage für einen Kraftwagen gemäß einer ersten Ausführungsform, wobei Fig. 1a das Funktionselement noch separat von der Wischerstange zeigt, Fig. 1b das Funktionselement in teilweise aufgesteckter Position an der Wischerstange zeigt, und Fig. 1c das vollständig auf der Wischerstange aufgesteckte Funktionselement darstellt;

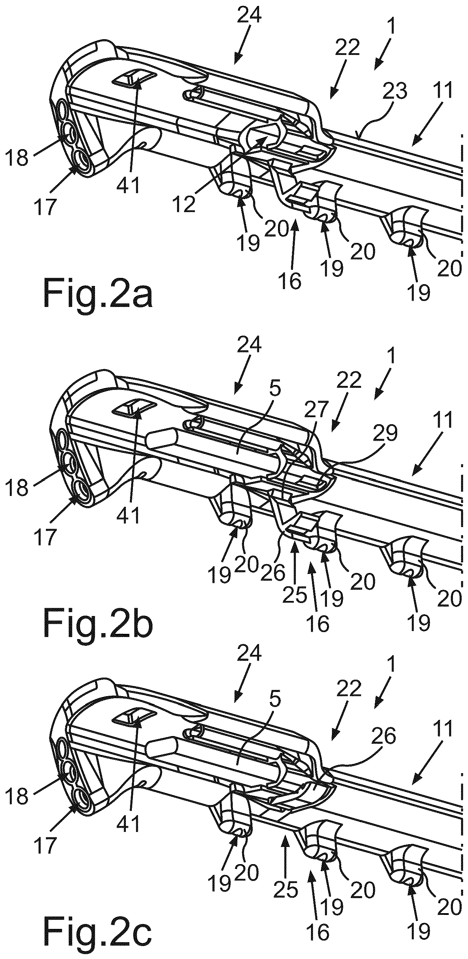

- Fig. 2a-2c: jeweilige ausschnittsweise Perspektivdarstellungen des Funktionselements der ersten Ausführungsform der Scheibenwischanlage, wobei Fig. 2a das Funktionselement vor dem Aufstecken auf die Wischerstange zeigt, Fig. 2b das Funktionselement bei vollständig aufgesteckter, jedoch noch nicht mittels einer Befestigungseinrichtung gesicherter Position zeigt, und Fig. 2c das anschließend mittels der Befestigungseinrichtung an der Wischerstange fixierte Funktionselement darstellt;

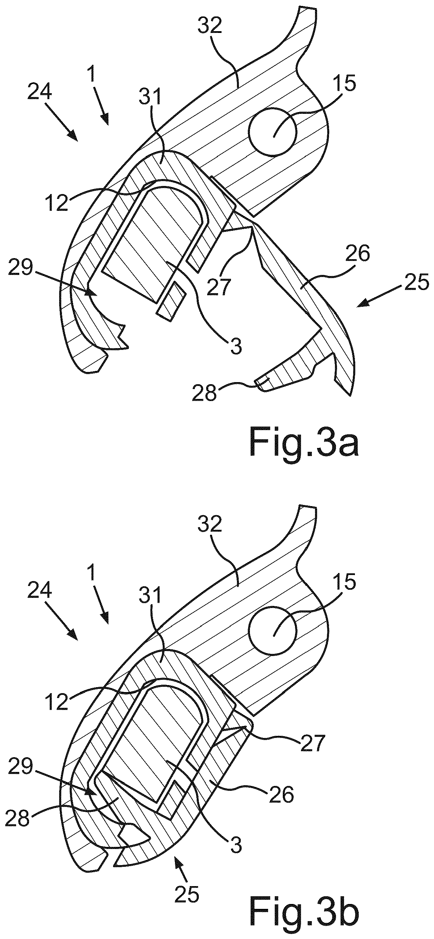

- Fig. 3a, 3b: jeweilige Schnittansichten durch das Funktionselement in seiner an der Wischerstange angeordneten Position, wobei Fig. 3a die Befestigungseinrichtung zum Fixieren des Funktionselements an der Wischerstange in geöffnetem Zustand und Fig. 3b die Befestigungseinrichtung in geschlossenem, das Funktionselement an der Wischerstange fixierenden Position dargestellt ist;

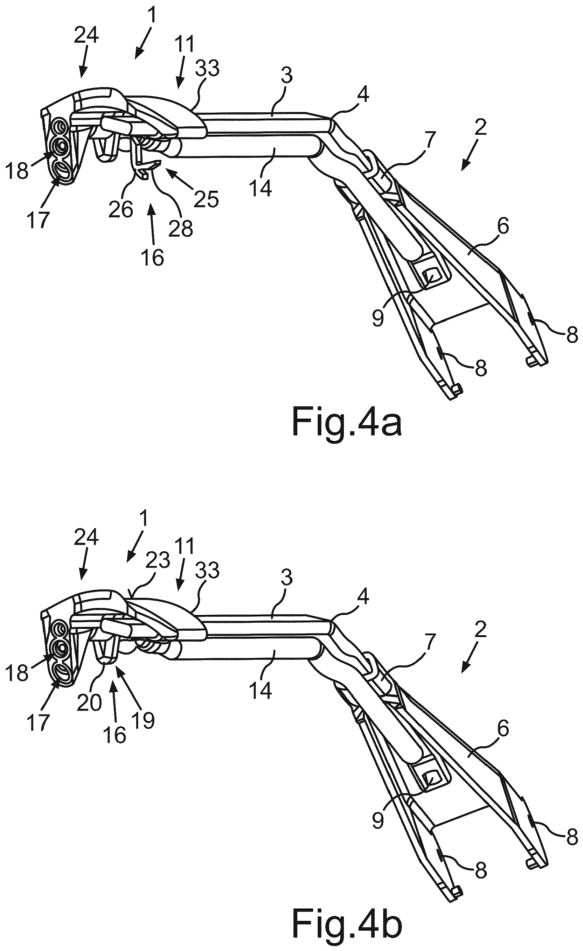

- Fig. 4a, 4b: jeweilige Perspektivansichten auf ein an der korrespondierenden Wischerstange befestigtes Funktionselement gemäß einer weiteren Ausführungsform, bei welcher das Funktionselement kürzer ausgebildet ist und sich demzufolge nicht bis an den Federkasten des Wischerarms erstreckt, wobei Fig. 4a das Funktionselement bei einer geöffneten Befestigungseinrichtung und Fig. 4b bei einer geschlossenen Befestigungseinrichtung zeigt; und

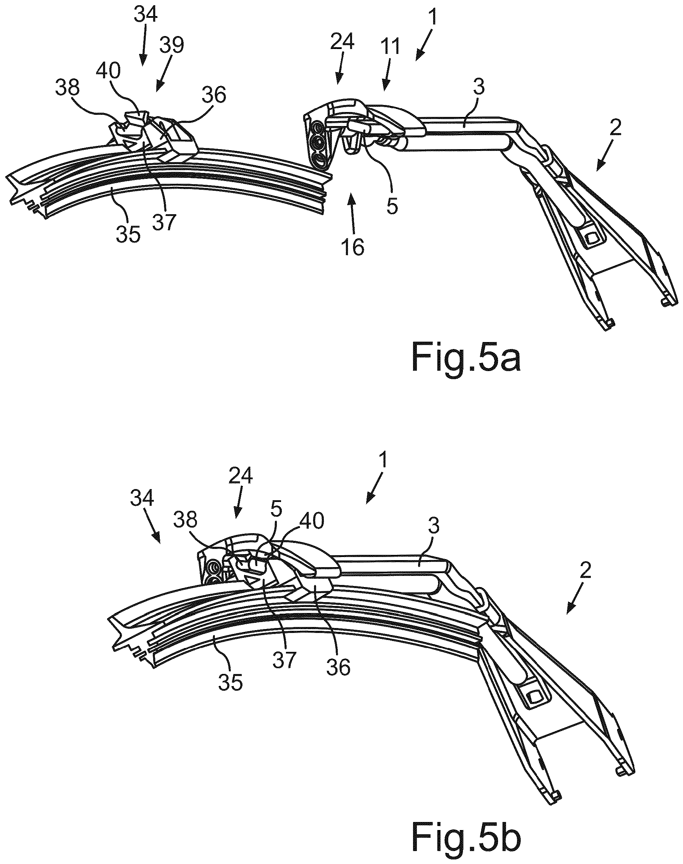

- Fig. 5a, 5b: jeweilige Perspektivansichten des Wischerarms mit dem daran montierten Funktionselement gemäß den Fig. 4a und 4b, wobei Fig. 5a ein Wischerblatt vor seiner Montage und Fig. 5b das Wischerblatt nach der Montage mittels eines Adapters zeigt, welcher unabhängig von dem Funktionselement am freien Ende der Wischerstange des Wischerarms angeordnet und fixiert ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

Die Figuren 1a, 1b und 1c zeigen in einer jeweiligen Perspektivansicht einen Montageablauf zur Anordnung und Fixierung eines im Weiteren noch näher erläuterten Funktionselements 1 an einem Wischerarm 2. Der Wischerarm 2 und das Funktionselement 1 sind hierbei in Fig. 1a zunächst explosionsartig getrennt dargestellt.

Hierbei ist insbesondere erkennbar, dass der Wischerarm 2 eine Wischerstange 3 umfasst, welche in einem Knickbereich 4 winkelig ausgebildet ist. Auf einer einem freien Ende 5 entgegengesetzten Seite ist die Wischerstange 3 mit einem Federkasten 6 fest verbunden, welcher einem Anschlussbereich 7 zumindest im Wesentlichen im Querschnitt rechteckförmig ausgebildet und auf die im Querschnitt zumindest im Wesentlichen ebenfalls rechteckförmige Wischerstange 3 aufgecrimpt ist. Der Federkasten 6 ist über Lageröffnungen 8 gelenkig mit einem nicht dargestellten Hebelelement der Scheibenwischanlage, welches gelegentlich auch als Befestigungsteil bezeichnet wird, verbunden, welches seinerseits mit einer zugehörigen Antriebswelle eines Antriebsmotors drehfest verbunden ist. Um die durch die Lagerzapfen 8 gebildete Achse ist der Wischerarm 2 gegenüber dem zugehörigen Hebelelement gegen die Federkraft eines Federelements verschwenkbar, welches seinerseits in eine Federaufnahme 9 am korrespondierenden Ende der Wischerstange 3 einhängbar ist, um beispielsweise in der Betriebsstellung den Wischerarm 2 bzw. ein zugehöriges Wischerblatt gegen die Oberfläche einer Frontscheibe zu drücken.

Das Funktionselement 1 weist einen ersten Teilbereich 10 und einen einteilig mit diesem ausgebildeten zweiten Teilbereich 11 auf, innerhalb welchen ein durchgängiger Aufnahmekanal 12 für die Wischerstange 3 vorgesehen ist. Der Aufnahmekanal 12 ist dabei im Querschnitt zumindest im Wesentlichen an den etwa rechteckförmigen Querschnitt der Wischerstange 3 angepasst, welche über ihren gesamten Verlauf einen zumindest im Wesentlichen einheitlichen Querschnitt aufweist. Demzufolge weist auch der Aufnahmekanal 12 über seine gesamte Länge innerhalb des Funktionselements 1 einen im Wesentlichen einheitlichen Querschnitt auf.

Wie im Weiteren in Zusammenschau mit den Figuren 1b und 1c erkennbar ist, ist das Funktionselement 1 demzufolge vom freien Ende 5 her auf die Wischerstange 3 aufsteckbar bzw. aufschiebbar, bis ein Ende 13 des ersten Teilbereichs 10 des Funktionselements 1 zumindest im Wesentlichen bündig an den Anschlussbereich 7 des Federkastens 6 anschließt. Damit ein Aufstecken des Funktionselements 1 auf die Wischerstange 3 bis zum Federkasten 6 erfolgen kann, ist das Funktionselement 1 im ersten Teilbereich 10 - ausgehend vom Ende 13 - zumindest über den Knickbereich 4 hinweg aus einem elastischen Material, beispielsweise einem entsprechenden Kunststoff, hergestellt. Durch dieses weichelastische Material ist es gegebenenfalls auch denkbar, dass der Anschlussbereich 7 des Federkastens 6 muffenartig vom Ende 13 des Teilbereichs 10 des Funktionselements 1 überragt wird.

Das Ende 13 des Teilbereichs 10 wird zudem überragt von einem Leitungsteil 14, über welchen das Funktionselement 1 auf im Weiteren noch näher beschriebene Weise mit einer Scheibenreinigungsflüssigkeit versorgt werden kann. Innerhalb des Leitungsteils 14 ist demzufolge wenigstens ein Versorgungskanal 15 für Scheibenreinigungsflüssigkeit ausgebildet, über welchen das Funktionselement 1 auf im Weiteren noch näher beschriebene Weise mit Scheibenreinigungsflüssigkeit versorgt werden kann. Dieser Versorgungskanal 15 erstreckt sich im Weiteren auch über den Teilbereich 10 sowie über den Teilbereich 11 des Funktionselements 1. Demzufolge ist in das Funktionselement 1 eine Scheibenreinigungseinrichtung 16 bzw. ein Teil von dieser ausgebildet, sodass es sich im vorliegenden Fall bei dem Wischerarm 2 um einen sogenannten Nasswischerarm handelt. Dies bedeutet, die mittels der Scheibenwischanlage zu reinigende Scheibe, insbesondere Frontscheibe des Kraftwagens, über Düsen mit Scheibenreinigungsflüssigkeit beaufschlagt werden kann, welche von dem Wischerarm 2 getragen sind. Das Ende des Leitungsteils 14 des Funktionselements 1 ist dabei über eine nicht weiter gezeigte Kanalanordnung mit einem der Scheibenreinigungsanlage für Scheibenreinigungsflüssigkeit nebst zugehöriger Pumpe verbunden. Üblicherweise ist diese im Frontraum bzw. Motorraum des Kraftwagens untergebracht. Wie insbesondere aus Fig. 1c erkennbar ist, verläuft das Leitungsteil 14 im vorliegenden Fall unterseitig der Wischerstange 3 bis in das Innere des Federkastens 6 weiter.

In Zusammenschau der Figuren 1a bis 1c ist des Weiteren erkennbar, dass das Aufschieben des Funktionselements 1 auf die Wischerstange 3 so weit erfolgt, dass diese - wie dies aus Fig. 1c in der endgültig montierten Position des Funktionselements 1 erkennbar ist - an einem freien Ende 5 über einen erheblichen Längenbereich aus dem Aufnahmekanal 12 herausragt. Dies bedeutet umgekehrt, dass das Funktionselement 1 mit den Teilbereichen 10, 11 über den Aufnahmekanal 12 mit einem vom freien Ende 5 der Wischerstange 3 beabstandeten Längenbereich der Wischerstange 3 verbunden ist.

Mit anderen Worten ragt das freie Ende 5 über den Teilbereich 11 des Funktionselements 1 hinaus beziehungsweise aus dem Aufnahmekanal 12 heraus.

Die in das Funktionselement 1 integrierte Scheibenreinigungseinrichtung 16 umfasst vorliegend ein Kanalsystem mit jeweiligen, in das Funktionselement 1 integrierten Kanälen, welche an diverse Düsen münden, über welche die zu reinigende bzw. zu wischende Scheibe bzw. das im Weiteren noch näher erläuterte zugehörige Wischerblatt mit Scheibenreinigungsflüssigkeit beaufschlagt werden können.

So umfasst die Scheibenreinigungseinrichtung 16 zunächst zwei Außenkreisdüsen 17, 18, über welche das Wischerblatt im Nahbereich seines Au-βenkreises, also demjenigen Bereich, in welchem das Wischerblatt den größten Radius seiner zu wischenden Fläche durchläuft, beaufschlagt wird. Die Außenkreisdüse 17 deckt dabei einen zu dem Funktionselement 1 näheren Bereich und die Außenkreisdüse 18 einen von dem Funktionselement 1 noch weiter entfernten Bereich nahe des Außenkreises des korrespondierenden Wischerblattes ab.

Außerdem umfasst die Scheibenreinigungseinrichtung 16 eine Mehrzahl von vorliegend fünf mittleren Düsen 19, welche sich allesamt zumindest im Wesentlichen in einer Reihe entlang der Erstreckungsrichtung des Funktionselements 1 erstrecken. Die jeweiligen Düsen 19 sind auf im Weiteren noch beschriebene Weise in jeweils zugehörigen, vom Funktionselement 1 bzw. vom Wischerarm 2 in Richtung der zu wischenden und zu reinigenden Scheibe abstehenden Höckern 20 untergebracht. Schließlich umfasst die Scheibenreinigungseinrichtung 16 wenigstens eine Innenkreisdüse 21, über welche das Wischerblatt des Wischerarms 2 im Bereich seines Innenkreises mit Reinigungsflüssigkeit versorgt wird, in welchem das Wischerblatt beim Wischvorgang seinen kürzesten Radius der korrespondierenden Wischfläche durchläuft. Alle Düsen 17, 18, 19 und 21 können dabei so eingestellt werden, dass diese bei einer Startbewegung, also im Falle einer Frontscheibe bei einer Aufwärtsbewegung des jeweiligen Wischerarms 2, die Reinigungsflüssigkeit in einem entsprechenden Abstand vor dem sich dahin bewegenden Wischerblatt auf die Scheibe, insbesondere die Frontscheibe, aufbringen. Gegebenenfalls kann auch das Wischerblatt mit der Scheibenreinigungsflüssigkeit unmittelbar beaufschlagt werden.

Neben der Integration der Scheibenreinigungseinrichtung 16 umfasst das Funktionselement 1 die weitere Funktion der Windabweisung. Demzufolge ist das Funktionselement 1 im vorliegenden Fall als Windabweiser 22 ausgebildet und umfasst auf der zumindest im Wesentlichen den Düsen 19 sowie der Wischerstange 3 abgewandten Vorder- bzw. Oberseite eine Windabweiskontur 23, um demzufolge ein besonders günstiges Überströmen der üblicherweise von vorne den jeweiligen Wischerarm 2 bzw. das korrespondierende Wischerblatt anströmende Luft zu ermöglichen.

Das vorliegende Funktionselement 1 ist also als Windabweiser 22 und zur Integration der Scheibenreinigungseinrichtung 16 ausgebildet. Als im Rahmen der Erfindung mitumfasst ist es jedoch zu betrachten, dass das Funktionselement 1 auch lediglich eine dieser beiden Funktionen wahrnehmen könnte.

Die Figuren 2a bis 2c zeigen in jeweiligen ausschnittsweisen und perspektivischen Unteransichten das Funktionselement 1 der in den Figuren 1a bis 1c beschriebenen Ausführungsform. Aus Fig. 2a ist dabei insbesondere der Aufnahmekanal für die Wischerstange 3 erkennbar, welche von einem dritten Teilbereich 24 des Funktionselements 1, welches mit den Teilbereichen 10 und 11 ebenfalls einteilig ausgebildet ist. Die Figuren 2b und 2c zeigen dabei die Position des Funktionselements 1, wenn dieses vollständig auf die Wischerstange 3 aufgesteckt ist. In dieser Position überdeckt der dritte Teilbereich 24 des Funktionselements 1 das freie Ende 5 der Wischerstange 3 insbesondere - bezogen auf die Einbaulage des Wischerarms 2 - an dessen Vorderseite und an dessen Unterseite. Ferner ist erkennbar, dass die Wischerstange 3 gegenüber dem Teilbereich 24 zurückspringend angeordnet ist.

Anhand einer Zusammenschau der Figuren 2a und 2b mit derjenigen gemäß Fig. 2c ist zudem erkennbar, dass im vorliegenden Fall das Funktionselement 1 mittels einer Befestigungseinrichtung 25 in Erstreckungsrichtung des Aufnahmekanals 12 gesichert an der Wischerstange 3 des Wischerarms 2 angeordnet ist. Die Sicherung erfolgt im vorliegenden Fall mittels einer Lasche 26, welche über ein Filmscharnier 27 schwenkbar an dem Funktionselement 1 angeordnet ist. Wird die Lasche 26 mittels eines Rastelements 28 in eine hierfür vorgesehene Rastaufnahme 29 im Bereich des Aufnahmekanals 12 eingesteckt, so kommt das Rastelement 28 auch mit einer Nut 30 (Fig. 1a) innerhalb der Wischerstange 3 in Eingriff. Hierdurch ergibt sich quasi eine Axialsicherung des Funktionselements 1 an der Wischerstange 3, sodass das Funktionselement 1 nach dem Aufschieben auf die Wischerstange 3 entsprechend lagegesichert ist.

Die Befestigungseinrichtung 25 ist in den Figuren 3a und 3b in einer jeweiligen Schnittansicht der Anordnung des Funktionselements 1 an der Wischerstange 3 nochmals in ihrer Funktionsweise erläutert. Hierbei ist insbesondere erkennbar, wie sich die axiale Sicherung des Rastelements 28 auf Seiten der Lasche 26 innerhalb der Rastaufnahme 29 bzw. an der Nut 30 der Wischerstange 3 ergibt.

Aus den Figuren 3a und 3b wird anhand der unterschiedlichen Schraffuren außerdem deutlich, dass das Funktionselement 1 vorliegend als Kunststoffteil in einem Zweikomponenten-Verfahren hergestellt ist. Insbesondere ist hierbei erkennbar, dass der Aufnahmekanal 12 im Bereich der Befestigungseinrichtung 25 durch eine Hartkomponente 31 gebildet ist. Ebenso sind die jeweiligen - die Reinigungsflüssigkeit führenden Kanäle im zweiten und dritten Teilbereich 11, 24 des Funktionselements 1 aus dieser Hartkomponente 31 - zumindest im Bereich der jeweiligen Düsen 17, 18, 19, 21 gebildet. Dazwischen können auch Teile durch eine Weichkomponente 32 des Kunststoffs gebildet werden, welche im Übrigen auch - wie bereits erläutert - den ersten Teilbereich 10 und den Leitungsteil 14 bilden. Durch die Weichkomponente 32 ist auch - wie dies aus den Figuren 3a und 3b erkennbar ist - die Windabweiserkontur 23 des Funktionselements 1 ausgebildet. Die Komponenten 31, 32 sind dabei insbesondere UV-beständig ausgebildet, um entsprechend dauerhaft haltbar zu sein.

In den Figuren 4a und 4b ist in einer jeweiligen Perspektivansicht eine alternative Ausführungsform des Funktionselements 1 dargestellt. Dieses Funktionselement 1 ist in seiner Ausgestaltung und Funktion im Wesentlichen identisch mit demjenigen gemäß dem ersten beschriebenen Ausführungsbeispiel, sodass im Weiteren nur auf die Unterschiede eingegangen werden soll.

Im Wesentlichen unterscheidet sich dieses Funktionselement 1 dadurch, dass bei diesem der erste Teilbereich 10 des Funktionselements 1, welcher sich zwischen dem zweiten Teilbereich 11 und dem Anschlussbereich 7 des Federkastens 6 erstreckt, hier nicht vorgesehen ist. Vielmehr endet das Funktionselement 1 mit einem Ende 33 in einem Abstand vor dem Knickbereich 4 und demzufolge in einem erheblichen Abstand vor dem Anschlussbereich 7 des Federkastens 6. Das Leitungsteil 14 des Funktionselements 1 erstreckt sich demzufolge über eine erhebliche Länge ohne zusätzliche Ummantelung der Wischerstange 3 unterhalb bzw. innenseitig von dieser bis in den Federkasten 6 hinein, von wo aus die weitere Verbindung zur Versorgung mit der Reinigungsflüssigkeit erfolgt.

Je nachdem, wie kurz das Funktionselement 1 ausgebildet ist, kann gegebenenfalls bei einigen Ausführungsformen auf eine oder mehrere jeweilige Innenkreisdüsen 21 verzichtet werden. Eine solche Ausgestaltung ergibt sich beispielsweise bei Fahrzeugen der Kompaktklasse, bei welchen eine relativ geringe Scheibenfläche gewischt beziehungsweise gereinigt werden braucht.

Auch auf einer jeweiligen Beifahrerseite einer größeren Scheibe bietet sich gegebenenfalls ein derartiges Konzept an. Im Übrigen weist die in das Funktionselement 1 integrierte Scheibenreinigungseinrichtung 16 eine zu der bereits im Zusammenhang mit den Figuren 1a bis 3b beschriebenen Ausführungsform zumindest im Wesentlichen identische Ausgestaltung auf. Allerdings können - je nach Länge des Funktionselements 1 bzw. insbesondere der Teilbereiche 11 und 24 - eine geringere Anzahl von mittleren Düsen 19 vorgesehen sein. Auch im vorliegenden Ausführungsbeispiel ist wiederum das Rastelement 28 erkennbar, mittels welchem das Funktionselement 1 nach dem Aufstecken auf die Wischerstange 3 gesichert werden kann.

In den Figuren 5a und 5b ist schließlich in einer jeweiligen Perspektivansicht die Montage eines Wischerblatts 34 an dem korrespondierenden freien Ende 5 der Wischerstange 3, welches aus dem Aufnahmekanal 12 des Funktionselements 1 herausragt, dargestellt. Das Wischerblatt 34 umfasst dabei ein Wischerblattelement 35, an welchem ein Grundkörper in Form eines Reiters 36 befestigt ist. Dieser Reiter 36 ist wiederum gelenkig mit einem Adapter 37 verbunden, sodass das Wischerblattelement 35 mit dem Reiter 36 relativ zu dem Adapter 37 in gewissen Grenzen verschwenkt werden kann. Der Adapter 37 umfasst eine im vorliegenden Fall zumindest teilweise offen ausgebildete Aufnahme 38, über welche der Adapter 37 bzw. somit das gesamte Wischerblatt 34 am freien Ende 5 der Wischerstange 3 aufgesteckt werden kann. Hierzu ist die Aufnahme 38, welche als eine Art Steckaufnahme ausgebildet ist, in ihrem Querschnitt bzw. in ihrer Form auf den Querschnitt der Wischerstange 3 abgestimmt. Nachdem der Adapter 37 mit der Aufnahme 38 über einen bestimmten Längenbereich auf das freie Ende 5 der Wischerstange 3 aufgesteckt ist, kommt eine Rasteinrichtung 39 in Eingriff, welche sowohl auf Seiten des Adapters 37 als auch auf Seiten der Wischerstange 3 ein entsprechendes Rastelement umfasst. Diese Rasteinrichtung 39 kann beispielsweise auf Seiten des Adapters 37 einen Rastzapfen oder dergleichen umfassen, welcher mit einer Rastvertiefung auf Seiten des freien Endes 5 der Wischerstange 3 in Eingriff kommt. Die Rasteinrichtung 39 ist dabei mittels eines Betätigungselements 40 in Form eines Druckknopfs oder dergleichen lösbar, welcher im vorliegenden Fall in Richtung des Wischerblattelements 39 gedrückt werden muss.

In seiner verrasteten Position durchragt dieses Betätigungselement 40 eine Durchgangsöffnung 42 innerhalb des Teilbereichs 24 des Funktionselements 1. In der verrasteten Position der Rasteinrichtung 39 ist somit das Betätigungselement 40 zumindest im Wesentlichen innerhalb dieser Durchgangsöffnung 41 angeordnet und kann demzufolge von vorne außen betätigt werden, um das Wischerblatt 34 vom freien Ende 5 der Wischerstange 3 abzunehmen.

Da somit das Funktionselement 1 in einem vom freien Ende 5 beabstandeten Längenbereich der Wischerstange 3 an dieser befestigt ist und der Adapter 37 des Wischerblatts 34 am freien Ende 5 der Wischerstange befestigt ist, ergibt sich für das Funktionselement 1 und das Wischerblatt 34 eine vollkommen unabhängige jeweilige Anordnung und Fixierung an der Wischerstange 3. Dies hat den Vorteil, dass das Wischerblatt 34 vollkommen unabhängig von dem Funktionselement 1 abgenommen und beispielsweise von Zeit zu Zeit ausgetauscht werden kann, ohne dass dies Einfluss auf die Funktionsweise des Funktionselements 1 hat. Insbesondere ist dabei zu berücksichtigen, dass sowohl die Windabweisfunktion als auch die Scheibenreinigungsfunktion des Funktionselements 1 vollkommen erhalten bleibt, auch wenn der Adapter 37 abgenommen wird, das Funktionselement 1 jedoch an der Wischerstange 3 verbleibt. Im Unterschied zu anderen Systemen wird somit mit dem Austausch des Wischerblatts 34 nicht ein Teil der Windabweiseinrichtung oder der Scheibenreinigungseinrichtung mitabgenommen und beispielsweise entsorgt, was entsprechende finanzielle und hinsichtlich der Nachhaltigkeit entstehende Probleme aufwirft. Vielmehr ist somit ein System geschaffen, bei welchem die Anbindung des Wischerblatts 34 und die Anbindung des Funktionselements 1 sowie die Durchführung der durch das Funktionselement 1 bewerkstelligten Funktionen völlig autark voneinander sind.

Im Funktionselement 1 können darüber hinaus weitere Elemente integriert sein. Insbesondere kann auch eine Heizung für die Scheibenreinigungseinrichtung mitintegriert sein. Auch hier ergeben sich die bereits im Zusammenhang mit der Scheibenreinigungseinrichtung beschriebenen Vorteile.

Insgesamt zeigen die Beispiele, wie durch die Erfindung eine Scheibenwaschanlage bereitgestellt werden kann, bei welcher das Funktionselement 1 und das Wischerblatt 34 vollkommen unabhängige voneinander an der Wischerstange 3 anordenbar und fixierbar sind.

## Patentansprüche

1. Scheibenwischanlage für einen Kraftwagen, mit wenigstens einem Wischerblatt (34), welches einen an einem Wischerblattelement (35) befestigten Reiter (36) sowie einem gelenkig mit dem Reiter (36) verbundenen Adapter (37) umfasst, welcher über eine Aufnahme (38) mit einem Bauelement eines Wischerarms (2) der Scheibenwischanlage verbunden ist, wobei
der Adapter (37) über die Aufnahme (38) mit einer Wischerstange (3) des Wischerarms (2) verbunden ist und wobei an der Wischerstange (3) des Wischerarms (2) separat von dem Adapter (37) ein weiteres Funktionselement (1) angeordnet ist, **dadurch gekennzeichnet, dass** die Wischerstange (3) mittels einer Rasteinrichtung (39) an dem Adapter (37) fixiert ist, welche mittels eines Betätigungselements (40) lösbar ist,
wobei
das Funktionselement (1) eine Durchgangsöffnung (41) aufweist, in welcher das Betätigungselement (40) der Rasteinrichtung (39) angeordnet ist.

2. Scheibenwischanlage nach Anspruch 1,
**dadurch gekennzeichnet, dass**
das Funktionselement (1) als Windabweiser (22) ausgebildet ist.

3. Scheibenwischanlage nach Anspruch 1 oder 2,
**dadurch gekennzeichnet, dass**
in das Funktionselement (1) eine Scheibenreinigungseinrichtung (16) integriert ist.

4. Scheibenwischanlage nach einem der vorhergehenden Ansprüche,
**dadurch gekennzeichnet, dass**
der Adapter (37) durch das Funktionselement (1) zumindest im Wesentlichen überdeckt ist.

5. Scheibenwischanlage nach einem der vorhergehenden Ansprüche,
**dadurch gekennzeichnet, dass**
der Adapter (37) im Bereich eines freien Endes (5) mit der Wischerstange (3) verbunden ist und dass das Funktionselement (1) mit einem vom freien Ende (5) beabstandeten Längenbereich der Wischerstange (3) verbunden ist.

6. Scheibenwischanlage nach einem der vorhergehenden Ansprüche,
**dadurch gekennzeichnet, dass**
sich das Funktionselement (1) bis zu einem Federkasten (6) des Wischerarms (2) erstreckt.

7. Scheibenwischanlage nach einem der Ansprüche 1 bis 5,
**dadurch gekennzeichnet, dass**
das Funktionselement (1) in einem Abstand vor einem Federkasten 86) des Wischerarms (2) endet.

8. Scheibenwischanlage nach einem der vorhergehenden Ansprüche,
**dadurch gekennzeichnet, dass**
das Funktionselement (1) mittels einer Befestigungseinrichtung (25) gesichert an der Wischerstange (3) des Wischerarms (2) angeordnet ist.

## Claims

1. A windscreen wiper system for a motor vehicle, with at least one wiper blade (34), which includes a slider (36) attached to a wiper blade element (35) as well as an adapter (37) connected to the slider (36) in articulated manner, which is connected to a component of a wiper arm (2) of the windscreen wiper system via a receptacle (38), wherein
the adapter (37) is connected to a wiper rod (3) of the wiper arm (2) via the receptacle (38) and wherein a further functional element (1) is arranged on the wiper rod (3) of the wiper arm (2) separately from the adapter (37), **characterized in that** the wiper rod (3) is fixed to the adapter (37) by means of a locking device (39), which is detachable by means of an actuating element (40),
wherein the functional element (1) comprises a passage opening (41), in which the actuating element (40) of the locking device (39) is arranged.

2. The windscreen wiper system according to claim 1,
**characterized in that**
the functional element (1) is formed as a wind deflector (22).

3. The windscreen wiper system according to claim 1 or 2,
**characterized in that**
a windscreen cleaning device (16) is integrated in the functional element (1).

4. The windscreen wiper system according to any one of the preceding claims,
**characterized in that**
the adapter (37) is at least substantially covered by the functional element (1).

5. The windscreen wiper system according to any one of the preceding claims,
**characterized in that**
the adapter (37) is connected to the wiper rod (3) in the area of a free end (5) and that the functional element (1) is connected to a length area of the wiper rod (3) spaced from the free end (5).

6. The windscreen wiper system according to any one of the preceding claims,
**characterized in that**
the functional element (1) extends up to a spring box (6) of the wiper arm (2).

7. The windscreen wiper system according to any one of claims 1 to 5,
**characterized in that**
the functional element (1) terminates at a distance in front of a spring box (6) of the wiper arm (2).

8. The windscreen wiper system according to any one of the preceding claims,
**characterized in that**
the functional element (1) is arranged secured on the wiper rod (3) of the wiper arm (2) by means of an attachment device (25).

## Revendications

1. Système d'essuie-glace pour un véhicule automobile, comportant au moins un balai d'essuie-glace (34) comprenant un curseur (36) fixé sur un élément de balai d'essuie-glace (35) ainsi qu'un adaptateur (37) relié au curseur (36) de manière articulée, lequel adaptateur étant relié à un composant d'un bras d'essuie-glace (2) du système d'essuie-glace par l'intermédiaire d'un logement (38),
l'adaptateur (37) étant relié à une tige d'essuie-glace (3) du bras d'essuie-glace (2) par l'intermédiaire du logement (38) et un élément fonctionnel (1) supplémentaire étant agencé sur la tige d'essuie-glace (3) du bras d'essuie-glace (2) séparément de l'adaptateur (37), **caractérisé en ce que** la tige d'essuie-glace (3) est fixée sur l'adaptateur (37) au moyen d'un dispositif d'enclenchement (39) qui peut être détaché au moyen d'un élément d'actionnement (40),
l'élément fonctionnel (1) comportant une ouverture de passage (41) dans laquelle est agencé l'élément d'actionnement (40) du dispositif d'enclenchement (39).

2. Système d'essuie-glace selon la revendication 1,
**caractérisé en ce que**
l'élément fonctionnel (1) est réalisé sous la forme d'un déflecteur de vent (22).

3. Système d'essuie-glace selon la revendication 1 ou 2,
**caractérisé en ce que**
un dispositif de nettoyage de pare-brise (16) est intégré dans l'élément fonctionnel (1).

4. Système d'essuie-glace selon l'une des revendications précédentes,
**caractérisé en ce que**
la quasi-totalité de l'adaptateur (37) est recouverte par l'élément fonctionnel (1).

5. Système d'essuie-glace selon l'une des revendications précédentes,
**caractérisé en ce que**
l'adaptateur (37) est relié à la tige d'essuie-glace (3) dans la zone d'une extrémité libre (5) et **en ce que** l'élément fonctionnel (1) est relié à une zone longitudinale de la tige d'essuie-glace (3) qui est espacée de l'extrémité libre (5).

6. Système d'essuie-glace selon l'une des revendications précédentes,
**caractérisé en ce que**
l'élément fonctionnel (1) s'étend jusqu'à un boîtier à ressort (6) du bras d'essuie-glace (2).

7. Système d'essuie-glace selon l'une des revendications 1 à 5,
**caractérisé en ce que**
l'élément fonctionnel (1) se termine à une certaine distance avant un boîtier à ressort (6) du bras d'essuie-glace (2).

8. Système d'essuie-glace selon l'une des revendications précédentes,
**caractérisé en ce que**
l'élément fonctionnel (1) est agencé de manière bloquée sur la tige d'essuie-glace (3) du bras d'essuie-glace (2) au moyen d'un dispositif de fixation (25).
